# FASCICULE DE BREVET EUROPEEN

(11) **EP 1 125 486 B1**
(45) Date de publication et mention de la délivrance du brevet: **31.03.2004**
(21) Numéro de dépôt: 00430007.5
(22) Date de dépôt: 18.02.2000
(51) Int. Cl.: A01B 39/22

(54) **Outil pour machine à cultiver le sol et machine utilisant de tels outils**
Bodenbearbeitungsmaschinengerät
Soil cultivating machine tool

(43) Date de publication de la demande: 22.08.2001
(73) Titulaire: PELLENC (Société Anonyme), 84120 Pertuis (FR)
(72) Inventeur: Pellenc, Roger, 84120 Pertuis (FR); Delran, Robert, 84120 Pertuis (FR)
(74) Mandataire: Marek, Pierre

(56) Documents cités:
- DE-A- 2 845 029
- DE-A- 3 341 040
- GB-A- 1 032 663
- NL-A- 8 004 449
- US-A- 2 215 364

## Description

La présente invention concerne un outil pour machine de culture du sol, du genre comportant un rotor tournant autour d'un axe vertical ou sensiblement vertical et muni, à sa périphérie, d'outils interchangeables de culture du sol. Elle vise également les machines de culture du sol utilisant ces outils, telles que machines à sarcler, bineuses, décavaillonneuses, etc. qui sont toutes destinées à extirper et/ou à déchiqueter les herbes et végétaux nuisibles et/ou à ameublir la surface du sol.

La configuration actuelle des outils de binage ou opération de travail analogue du sol, utilisés dans les machines du genre précité, voir p. ex. US-A-2 215 364, ne tient pas compte de l'ensemble des problèmes découlant de la rotation de ces outils dans le sol tels que résistance à la pénétration, usure rapide, résistance des mottes de terre à l'émiettement, violence des chocs lors de la rencontre de pierres, etc., de sorte que leur efficacité s'en ressent, de même que leur durée possible d'utilisation.

Un objet de l'invention est de proposer un outil et une machine permettant une meilleure résolution des problèmes susmentionnés.

Selon l'invention, cet objectif est réalisé au moyen d'un outil interchangeable selon la revendication 1.

Grâce à ces dispositions, les outils pénètrent plus facilement dans le sol ; ils sont soumis à des frottements moins importants de sorte que leur usure est moins rapide, et, de ces avantages, en découle un autre constitué par une consommation d'énergie plus réduite.

D'autre part, les outils sont tendus par la force centrifuge lorsque le rotor tourne et ils s'escamotent en pivotant sur leur axe de fixation, lors de la rencontre d'une grosse pierre ou autre obstacle dur.

Selon une autre disposition avantageuse, la partie active de l'outil s'étend vers l'avant, en considérant le sens de rotation dudit outil, à partir de l'extrémité distale de la portion de raccordement.

Grâce à cette disposition, la partie active inférieure de l'outil présente une importante réserve de matière et peut remplir durablement et efficacement sa fonction malgré une importante usure.

En outre, bien qu'on prévoit une réalisation monobloc de l'outil, la partie active ou au moins la portion frontale de la partie active dudit outil pourrait être interchangeable et rapportée, par vissage, soudage ou autrement, cette partie frontale étant alors exécutée dans un matériau présentant une dureté très élevée tel que carbure de tungstène, stellite, etc., ou ayant préalablement subi des recouvrements durs par pastillage, poudrage, projection, etc., tandis que la partie restante de l'outil est réalisée dans un matériau de dureté moindre et de coût plus réduit (acier, par exemple).

Suivant une autre disposition avantageuse, la portion antérieure de la partie active de l'outil est inclinée vers l'avant.

La disposition selon l'invention permet d'éviter le "talonnage" et de conserver la profondeur de travail, malgré l'usure.

Selon une autre disposition avantageuse, la surface supérieure de la partie active de l'outil, comporte une bosse située à la suite de sa portion antérieure en considérant son sens de rotation, cette bosse permettant d'éclater le sol.

Selon une autre disposition avantageuse, le bord extérieur de la partie active de l'outil présente, vue dans la direction de son axe de pivotement, une forme courbe.

La machine de sarclage selon l'invention est remarquable par le fait que son rotor est agencé pour permettre le montage, avec une liberté de pivotement, d'au moins deux outils précédemment décrits, dans des conditions telles que lorsque ceux-ci sont installés sur ledit rotor, leurs axes de pivotement convergent vers le bas en direction de l'axe de rotation de ce dernier, en formant un angle avec ledit axe de rotation.

Comme indiqué précédemment, lorsque les outils rencontrent un obstacle, ils s'escamotent en pivotant vers l'arrière autour de leur axe de pivotement, en amortissant ainsi les chocs et en évitant de déstabiliser l'ensemble de la tête de sarclage de la machine. Pendant une telle phase d'escamotage (qui peut résulter soit de la rencontre d'un obstacle rigide tel qu'une pierre ou autre, soit d'une compacité excessive du sol), la profondeur de travail est réduite, grâce à l'angle susmentionné, ce qui permet d'esquiver l'obstacle et de limiter le couple et donc la puissance à transmettre pour maintenir la vitesse de rotation du rotor.

Les buts, caractéristiques et avantages ci-dessus, et d'autres encore, ressortiront mieux de la description qui suit et des dessins annexés dans lesquels :
La figure 1 est une vue en élévation, d'un exemple de réalisation avantageux de l'outil de sarclage selon l'invention.
La figure 2 est une vue en plan de cet outil.
La figure 3 est une vue de face, avec coupe partielle, de l'outil.
La figure 4 est une vue en coupe selon la ligne 4-4 de la figure 3.
La figure 5 est une vue de face simplifiée, avec coupes partielles, d'une tête de machine de sarclage, selon l'invention.
La figure 6 est une vue de face, avec coupes partielles, d'un autre exemple de réalisation d'une tête de machine de sarclage comportant application de l'invention.
La figure 7 est une vue en plan de la figure 6, le tracé en pointillés illustrant l'escamotage d'un outil lors de la rencontre d'un obstacle dur.

On se réfère auxdits dessins pour décrire un exemple de réalisation avantageux, bien que nullement limitatif, de l'outil et de la machine de sarclage selon l'invention.

Selon une première disposition caractéristique, cet outil désigné dans son ensemble par la référence 1 comprend (en considérant sa position en cours de travail) :
- une extrémité de fixation 2 comprise dans une zone spatiale supérieure Z1, cette extrémité étant agencée ou conformée pour pouvoir être reliée au rotor d'une machine de culture du sol, telle qu'une machine de sarclage ;
- une portion de raccordement 3 comprise dans une zone spatiale intermédiaire Z2, cette portion intermédiaire s'étendant vers le bas à partir de ladite extrémité de fixation ; et
- une partie active 4 comprise dans une zone spatiale inférieure Z3.

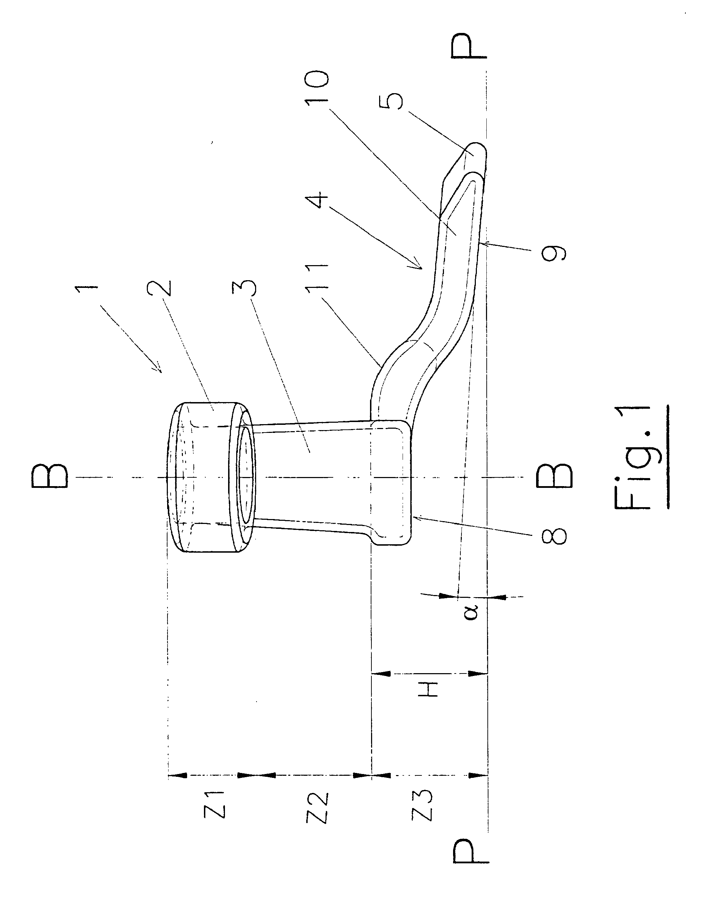

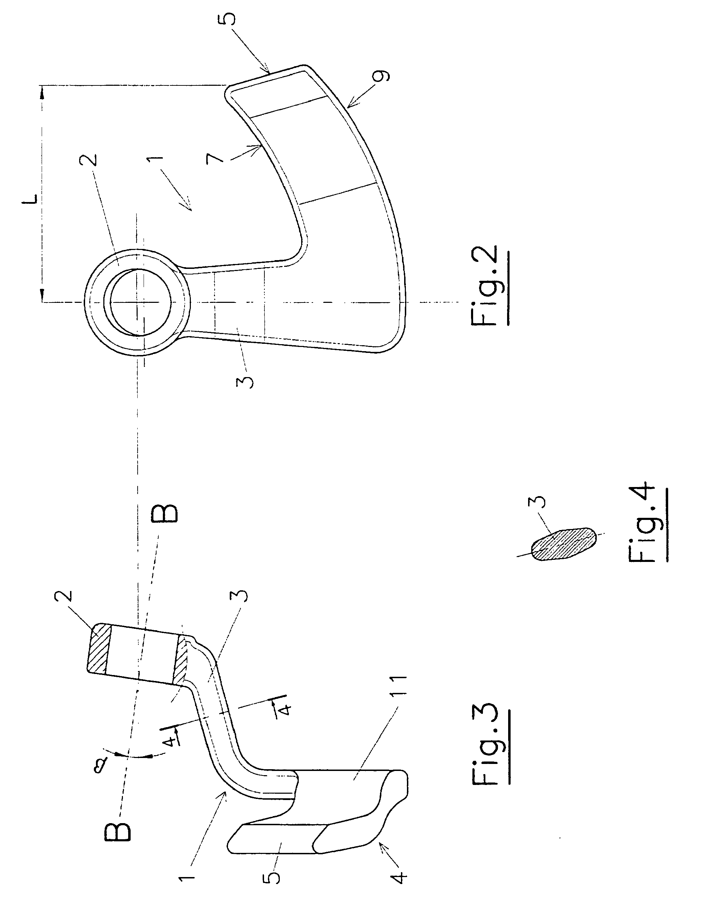

La portion de raccordement 3 a une position inclinée par rapport à l'extrémité de fixation 2 et à la partie active 4, de sorte que celles-ci se trouvent éloignées l'une de l'autre, à la fois dans la direction verticale (figure 1) et dans la direction horizontale (figure 2).

L'extrémité supérieure de fixation 2 de l'outil est agencée ou conformée pour permettre son montage avec une liberté de pivotement d'amplitude limitée, sur le rotor d'une machine de sarclage, ou autre machine de culture du sol, cette extrémité étant, par exemple, constituée par une bague ou douille de fixation permettant le montage dudit outil autour d'un axe d'articulation, comme on l'explique dans la suite du présent exposé.

La partie inférieure active 4 de l'outil s'étend vers l'avant, en considérant le sens de rotation de ce dernier, à partir de l'extrémité distale de la portion de raccordement 3.

Cette partie active 4 présente une faible hauteur H correspondant à la hauteur de la zone Z3 dans laquelle évolue ladite partie, cette hauteur étant de préférence, inférieure à la moitié de la hauteur totale Z1 + Z2 + Z3 de l'outil.

La partie active 4 présente, vue dans la direction de l'axe de pivotement B-B de l'outil 1, ou selon l'axe de rotation du rotor sur lequel celui-ci est destiné à être monté, une forme arquée délimitée par un bord d'attaque 5, un bord extérieur convexe 6 et un bord intérieur concave 7, le bord d'attaque ayant une position inclinée vers l'avant et en direction du bord intérieur 7, par rapport à un rayon joignant l'axe de pivotement de l'outil à l'extrémité avant du bord extérieur convexe 6 (figure 2). La partie active 4 se présente ainsi sous forme d'une bande courbe orientée vers l'avant et éloignée de l'extrémité de fixation 2 de l'outil.

D'autre part, la partie active 4 a une longueur L qui, lors de l'escamotage, permet de conserver la largeur de travail et donc de tangenter le cep.

Le bord d'attaque 5 de la partie active 4 est biseauté pour faciliter la pénétration dans le sol.

La partie active 4 est inclinée en direction de l'avant, de sorte que la surface inférieure 8 de sa portion postérieure de rattachement à la partie intermédiaire 3, se trouve placée à un niveau sensiblement plus élevé que celui où se trouve la surface inférieure 9 de sa portion antérieure travaillante 10.

D'autre part, la surface inférieure 9 de la portion avant 10 est approximativement plane et forme un angle de dépouille α de faible valeur, par exemple de l'ordre de 6°, avec un plan P-P sensiblement perpendiculaire à l'axe de pivotement B-B de l'outil.

La surface supérieure de la partie active 4 de l'outil comporte une bosse 11 située à la suite de sa portion antérieure, à distance du bord d'attaque 5.

L'outil interchangeable précédemment décrit peut être réalisé d'une seule pièce en acier ou alliage d'acier résistant à l'usure, forgée et traitée. Toutefois, selon une autre disposition caractéristique de l'invention, on prévoit de réaliser sa partie active ou au moins la portion antérieure travaillante 10 de celle-ci dans un matériau extra dur tel que carbure de tungstène, stellite, etc., ou dans un matériau traité pour présenter une grande dureté, et de rapporter cette partie ou portion active, sur la partie restante de l'outil, par vissage, soudage ou autrement.

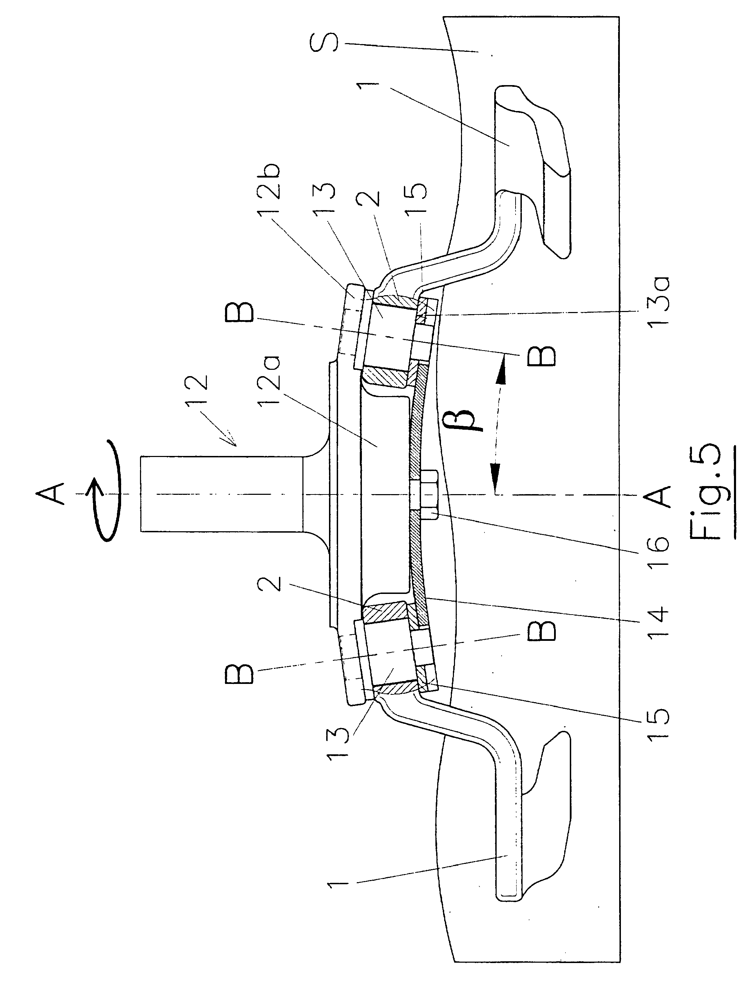

On a illustré, à la figure 5, un exemple de réalisation simplifiée d'une tête de machine à cultiver le sol, laquelle est constituée par une machine à sarcler ou machine analogue dont on a seulement représenté le rotor 12, les outils 1 et le système de fixation amovible de ces derniers, dans une position de culture du sol S.

Le rotor 12, les outils 1 et le système de fixation amovible de ces derniers sont conformés et agencés pour permettre le montage sur le rotor 12, avec une liberté de pivotement, d'au moins deux outils 1, dans des conditions telles que lorsque ceux-ci sont installés sur ledit rotor, leurs axes de pivotement B-B convergent vers le bas en direction de l'axe A-A de ce dernier, en formant un angle β avec ledit axe de rotation A-A, par exemple un angle de l'ordre de 9°.

Le système de fixation amovible des outils comprend, pour chacun de ceux-ci, un axe d'articulation 13 autour duquel est montée, avec une aptitude de pivotement, la bague d'articulation 2 de l'outil. L'une des extrémités de cet axe d'articulation est logée dans un perçage ménagé au voisinage de la périphérie du rotor 12, tandis que son extrémité opposée est engagée dans une ouverture que présente une bride de fixation 14. Une rondelle de pression 15 peut être disposée autour de l'extrémité inférieure de l'axe d'articulation 13, entre un épaulement circulaire 13a de ce dernier et la bride de fixation 14, de façon à permettre le pivotement de l'outil.

Les trous ménagés dans le rotor 12 pour le montage des outils interchangeables 1 ont un axe B-B incliné par rapport à l'axe de rotation A-A dudit rotor, de sorte que les axes d'articulation 13 et les axes des bagues de montage 2 sont également inclinés selon l'axe B-B.

La bride 14 est fixée axialement à la base du rotor 12 au moyen d'une unique vis 16 traversant un orifice central de la plaque et se vissant dans un taraudage ménagé dans la portion inférieure dudit rotor.

De la sorte, pour remplacer les outils 1, par exemple en cas d'usure de ces derniers, il suffit de dévisser la vis 16, d'enlever la bride 14 et les rondelles 15, de détacher l'outil à remplacer avec son axe d'articulation 13. Pour fixer les nouveaux outils, on procède de manière inverse.

La tête de travail de la machine à cultiver le sol selon l'invention peut être équipée d'au moins deux outils 1 mais son rotor 12 peut être conformé pour recevoir trois outils ou plus, angulairement et régulièrement espacés.

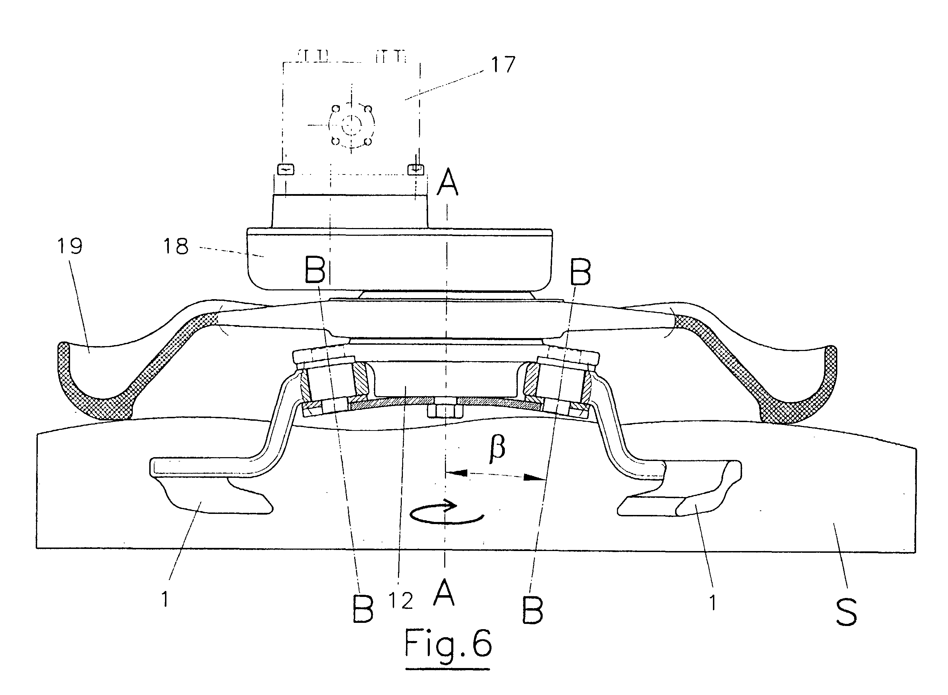

Lorsque la tête de travail est équipée de deux outils 1, ces derniers sont fixés en des emplacements diamétralement opposés du rotor 12 (figures 4 à 7). Dans ce cas, et comme illustré aux figures 5 et 6, les surfaces d'appui de la bride 14 constituées par les faces inférieures des rondelles 15 et la portion centrale du rotor 12, sont placées sur un arc de cercle, alors que ladite bride de fixation est sensiblement plane et dotée d'une capacité de déformation élastique. Lorsque la vis 16 est vissée à fond, on provoque une déformation concave de la bride 14 dont les extrémités s'appliquent alors fortement, par effet ressort, sur les rondelles 15 de maintien des axes d'articulation 13.

Le rotor 12 comporte une partie inférieure cylindrique 12a de diamètre plus réduit que celui de sa partie supérieure 12b sous laquelle sont fixés les outils 1. Cette partie inférieure cylindrique 12a sert de butée limitant le mouvement d'escamotage des outils vers l'arrière, lorsque ceux-ci rencontrent un obstacle dur.

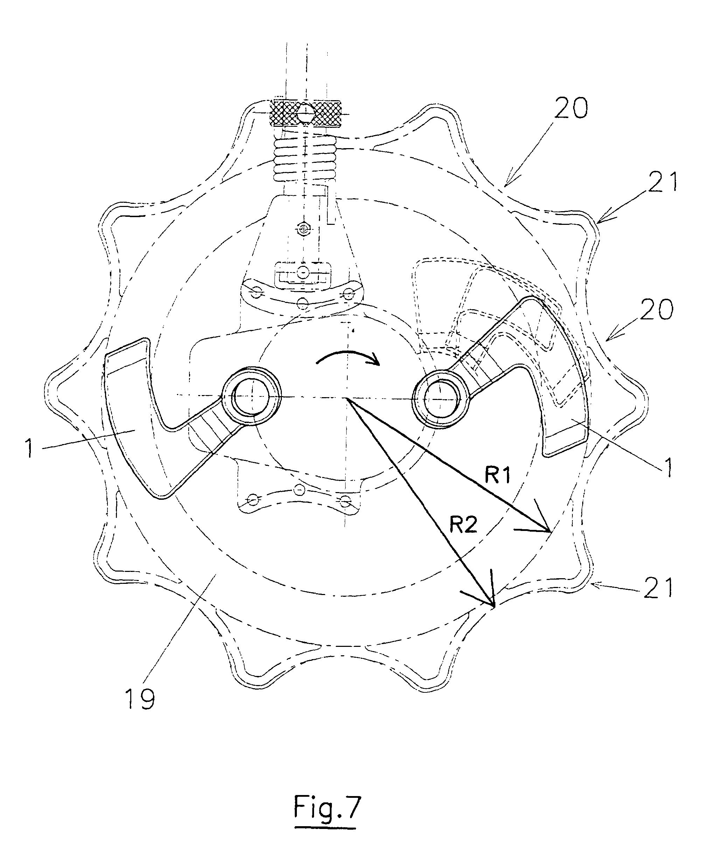

Les figures 6 et 7 illustrent une application de l'invention à une machine de sarclage décrite dans une autre Demande de Brevet de la Demanderesse.

Selon ce mode d'exécution, la tête de sarclage comporte deux outils 1 fixés sur un rotor 12 entraîné par un moteur 17 accouplé à un réducteur 18, et un guide engrenant circulaire 19, en forme de cloche, disposé au-dessus des outils, de préférence coaxialement à l'axe de rotation A-A de ces derniers, ce guide engrenant 19 étant apte à tourner autour de cet axe de rotation et ayant vue dans la direction dudit axe, la forme générale d'un disque échancré présentant, alternativement, à sa périphérie, des échancrures 20 et des parties saillantes 21, la longueur du rayon d'action R1 des outils rotatifs étant inférieure à celle du rayon R2 d'un cercle tangent au fond desdites échancrures 20 du guide engrenant 19.

De manière préférée, le guide échancré en forme de cloche est monté à rotation libre.

Il pourrait aussi cependant être accouplé à une motorisation assurant son entraînement en rotation à une vitesse sensiblement égale à la vitesse linéaire d'avancement du tracteur ou autre véhicule équipé de la machine à sarcler, ce rapport de vitesses étant, par exemple, obtenu au moyen d'un variateur hydraulique connu en soi.

Grâce à cet agencement, les outils 1 équipant la tête de sarclage peuvent ainsi tourner et travailler autour des ceps de vigne ou des pieds des arbustes, très près de ceux-ci mais sans les toucher, de sorte qu'ils ne risquent cependant pas d'être blessés ou sectionnés par lesdits outils. Il ne subsiste donc aucune zone non travaillée autour des ceps ou pieds des plants.

En outre, la réalisation du guide engrenant sous forme de cloche permet de réduire considérablement les projections de poussières et de pierres, et de limiter la profondeur de travail des outils. D'autre part, le volume intérieur libre de la cloche, permet d'éviter la compression de la couche de terre ameublie par les outils de sarclage.

Les rotors des machines équipées d'outils selon l'invention peuvent tourner, autour de leur axe A-A, à des vitesses comprises entre 200 et 1500 tr/mn. Les outils 1 étant montés libres en rotation autour de leur axe d'articulation B-B incliné par rapport à l'axe A-A, lorsque le rotor tourne, les outils 1 sont tendus sous l'effet de la force centrifuge (tracés en traits pleins de la figure 7). Lorsqu'ils rencontrent un obstacle dur (pierre, gros morceau de bois, ferraille ou autre) ou lorsque la capacité du sol présente une résistance excessive à la pénétration, ils s'escamotent par pivotement autour de leur axe d'articulation B-B (tracés en traits interrompus de la figure 7), ce qui permet d'amortir les chocs et évite une déstabilisation de la tête de travail de la machine. Pendant cette phase d'escamotage, les outils pivotent vers l'arrière en s'élevant, grâce à l'angle d'inclinaison β de leur axe d'articulation B-B, de sorte que la profondeur de travail se trouve réduite, ce qui permet d'esquiver l'obstacle et de limiter le couple et donc la puissance à transmettre pour maintenir la vitesse de rotation du rotor.

D'autre part, en considérant l'application de l'invention à une machine du genre de celle qui est illustrée à la figure 7, on observe que lors de la phase d'escamotage, l'outil, du fait de sa forme, tangente toujours le diamètre extérieur du guide en forme de cloche, de sorte que la largeur de travail reste constante.

## Revendications

1. Outil pour machine à cultiver le sol, telle que machine à sarcler, bineuse, décavaillonneuse, comprenant un rotor sur lequel sont montés des outils interchangeables, comportant :
- une extrémité de fixation (2) comprise dans une zone spatiale supérieure (Z1), par rapport à la hauteur totale de l'outil, destinée à permettre le montage amovible de l'outil sur le rotor ;
- une portion de raccordement (3) comprise dans une zone spatiale intermédiaire (Z2), cette portion intermédiaire s'étendant vers le bas à partir de ladite extrémité de fixation ; et
- une partie active (4) comprise dans une zone spatiale inférieure (Z3) ;
ladite portion de raccordement (3) ayant une position inclinée par rapport à l'extrémité de fixation (2) et à la partie active (4), de sorte que celles-ci se trouvent éloignées l'une de l'autre, à la fois dans la direction verticale et dans la direction horizontale,
**caractérisé en ce que** :
- l'extrémité de fixation (2) est agencée ou conformée pour permettre le montage dudit outil (1) sur le rotor, avec une liberté de pivotement autour de l'axe (B-B) de ladite extrémité de fixation (2) et une liberté d'effacement dans une direction opposée au sens de rotation dudit rotor, en cours de travail,
- et **en ce que** la partie active (4) présente une portion antérieure travaillante (10) avec une surface intérieure (9) approximativement plane et formant un angle de dépouille de faible valeur avec un plan approximativement perpendiculaire à l'axe de pivotement (B-B) de l'outil.

2. Outil suivant la revendication 1, **caractérisé en ce que** son extrémité supérieure de fixation est constituée par une bague (2) permettant la fixation dudit outil autour d'un axe d'articulation (13).

3. Outil selon l'une des revendications 1 ou 2, **caractérisé en ce que** sa partie inférieure active (4) présente une hauteur (H) inférieure à la moitié de la hauteur totale (Z1 + Z2 + Z3) dudit outil.

4. Outil selon l'une quelconque des revendications 1 à 3, **caractérisé en ce que** sa partie inférieure active (4) s'étend vers l'avant, en considérant le sens de rotation de ce dernier, à partir de l'extrémité distale de la portion intermédiaire de raccordement (3) dudit outil.

5. Outil suivant la revendication 4, **caractérisé en ce que** sa partie inférieure active (4) présente un bord extérieur convexe (6).

6. Outil suivant l'une quelconque des revendications 1 à 5, **caractérisé en ce que** sa partie active est inclinée en direction de l'avant, de sorte que la surface inférieure (8) de sa portion postérieure se trouve placée à un niveau plus élevé que celui ou se trouve la surface inférieure (9) de sa portion antérieure travaillante (10).

7. Outil selon l'une quelconque des revendications 1 à 6, **caractérisé en ce que** la surface supérieure de la partie inférieure active (4) comporte une bosse (11) située à la suite de sa portion antérieure (10), à distance du bord d'attaque (5).

8. Outil selon l'une quelconque des revendications 1 à 7, **caractérisé en ce que** la partie inférieure active (4) ou au moins la portion antérieure travaillante (10) de celle-ci, est exécutée dans un matériau présentant une dureté élevée, et rapportée sur la partie restante de l'outil.

9. Machine pour la culture du sol, comprenant un rotor (12) tournant autour d'un axe vertical ou sensiblement vertical (A-A) et muni, à sa périphérie, d'outils interchangeables, **caractérisée en ce que** ces outils (1) sont réalisés suivant l'une quelconque des revendications 1 à 8.

10. Machine pour la culture du sol selon la revendication 9, munie d'au moins deux outils (1) réalisés selon l'une quelconque des revendications 1 à 8, **caractérisée en ce que** le rotor (12) et l'extrémité d'articulation (2) desdits outils (1) sont agencés pour permettre le montage, avec une liberté de pivotement, de ces outils, dans des conditions telles que lorsque ceux-ci sont installés sur le rotor (12), leurs axes de pivotement (B-B) convergent vers le bas, en direction de l'axe de rotation (A-A) de ce dernier, en formant un angle (β) avec ledit axe de rotation (A-A).

## Patentansprüche

1. Werkzeug für eine Maschine zur Bodenbearbeitung, wie beispielsweise eine Maschine zum Unkrautjäten, eine Hackmaschine, einen Weinbaupflug, enthaltend einen Rotor, auf dem auswechselbare Werkzeuge befestigt sind, enthaltend:
- ein in einer in bezug auf die Gesamthöhe des Werkzeugs oberen räumlichen Zone (Z1) enthaltenes Befestigungsende (2), das dazu bestimmt ist, die abnehmbare Montage des Werkzeugs auf dem Rotor zu ermöglichen;
- einen in einer dazwischenliegenden räumlichen Zone (Z2) enthaltenen Anschlußabschnitt (3), wobei sich dieser Zwischenabschnitt von dem Befestigungsende nach unten erstreckt; und
- einen aktiven Teil (4), der in einer unteren räumlichen Zone (Z3) enthalten ist;
wobei der Anschlußabschnitt (3) eine in bezug auf das Befestigungsende (2) und den aktiven Teil (4) schräge Position einnimmt, so dass diese einerseits in der vertikalen Richtung und andererseits in der horizontalen Richtung voneinander beabstandet sind,
**dadurch gekennzeichnet, dass**
- das Befestigungsende (2) so angeordnet oder ausgebildet ist, dass die Montage des Werkzeugs (1) an dem Rotor mit einer Schwenkfreiheit um die Achse (B-B) des Befestigungsendes (2) und einer Rückstellfreiheit in eine der Drehrichtung des Rotors während der Arbeit entgegengesetzte Richtung ermöglicht ist,
- und dadurch, dass der aktive Teil (4) einen vorderen arbeitenden Abschnitt (10) mit einer unteren Fläche (9) aufweist, die annähernd eben ist und einen Freiwinkel von geringer Größe mit einer zur Schwenkachse (B-B) des Werkzeugs annähernd senkrechten Ebene bildet.

2. Werkzeug nach Anspruch 1, **dadurch gekennzeichnet, dass** sein oberes Befestigungsende durch einen Ring (2) gebildet wird, der die Befestigung des Werkzeugs um eine Gelenkachse (13) ermöglicht.

3. Werkzeug nach einem der Ansprüche 1 oder 2, **dadurch gekennzeichnet, dass** der untere aktive Teil (4) eine Höhe (H) aufweist, die kleiner als die Hälfte der Gesamthöhe (Z1 + Z2 + Z3) des Werkzeugs ist.

4. Werkzeug nach einem der Ansprüche 1 bis 3, **dadurch gekennzeichnet, dass** sein unterer aktiver Teil (4) sich unter Berücksichtigung der Drehrichtung des letzteren von dem distalen Ende des Anschluß-Zwischenabschnitts (3) des Werkzeugs nach vorne erstreckt.

5. Werkzeug nach Anspruch 4, **dadurch gekennzeichnet, dass** sein unterer aktiver Teil (4) einen konvexen äußeren Rand (6) aufweist.

6. Werkzeug nach einem der Ansprüche 1 bis 5, **dadurch gekennzeichnet, dass** sein aktiver Teil so in Vorwärtsrichtung geneigt ist, dass die untere Fläche (8) seines rückwärtigen Abschnitts auf einer höheren Ebene positioniert ist als die untere Fläche (9) seines vorderen arbeitenden Abschnitts (10).

7. Werkzeug nach einem der Ansprüche 1 bis 6, **dadurch gekennzeichnet, dass** die obere Fläche des unteren aktiven Teils (4) einen runden Vorsprung (11) aufweist, der nach dem vorderen Abschnitt (10) von der Anlegekante (5) beabstandet positioniert ist.

8. Werkzeug nach einem der Ansprüche 1 bis 7, **dadurch gekennzeichnet, dass** der untere aktive Teil (4) oder wenigstens dessen vorderer arbeitender Abschnitt (10) aus einem Material ausgeführt ist, das eine große Festigkeit aufweist, und am restlichen Teil des Werkzeugs befestigt ist.

9. Maschine zur Bodenbearbeitung, umfassend einen Rotor (12), der sich um eine vertikale oder im wesentlichen vertikale Achse (A-A) dreht und an seinem Umfang mit auswechselbaren Werkzeugen versehen ist, **dadurch gekennzeichnet, dass** diese Werkzeuge (1) gemäß einem der Ansprüche 1 bis 8 ausgeführt sind.

10. Maschine zur Bodenbearbeitung nach Anspruch 9, die mit wenigstens zwei Werkzeugen (1) versehen ist, die nach einem der Ansprüche 1 bis 8 ausgeführt sind, **dadurch gekennzeichnet, dass** der Rotor (12) und das Gelenkende (2) der Werkzeuge (1) so angeordnet sind, dass sie die Montage dieser Werkzeuge mit einer Schwenkfreiheit unter Bedingungen ermöglichen, wie beispielsweise, dass in ihrem an dem Rotor (12) angebauten Zustand ihre Schwenkachsen (B-B) nach unten in Richtung auf die Drehachse (A-A) des letzteren zusammenlaufen, wobei sie einen Winkel (β) mit der Rotationsachse (A-A) bilden.

## Claims

1. Tool for a machine for cultivation of the soil such as a machine for hoeing up weeds, a hoer or a vineyard plough, comprising a rotor on which there are fitted interchangeable tools, comprising:
- a securing end (2) which is contained in a spatial area (Z1) which is upper in relation to the total height of the tool, and is designed to permit detachable fitting of the tool onto the rotor;
- a connection portion (3) which is contained in an intermediate spatial area (Z2), this intermediate portion extending downwards from the said securing end; and
- an active part (4) which is contained in a lower spatial area (Z3);
the said connection portion (3) having a position which is inclined relative to the securing end (2) and to the active part (4), such that the latter are spaced from one another, both in the vertical direction and in the horizontal direction,
**characterised in that**:
- the securing end (2) is arranged or shaped in order to permit fitting of the said tool (1) onto the rotor, with freedom of pivoting around the axis (B-B) of the said securing end (2) and freedom of effacement in a direction opposite the direction of rotation of the said rotor, during work; and
- **in that** the active part (4) has a working front portion (10) with a lower surface (9) which is approximately flat and forms a relief angle with a low value, with a plane which is approximately perpendicular to the axis of pivoting (B-B) of the tool.

2. Tool according to claim 1, **characterised in that** its upper securing end is constituted by a ring (2) which permits securing of the said tool around an axis of articulation (13).

3. Tool according to claim 1 or claim 2, **characterised in that** its active, lower part (4) has a height (H) which is less than half the total height (Z1 + Z2 + Z3) of the said tool.

4. Tool according to any one of claims 1 to 3, **characterised in that** its active, lower part (4) extends forwards, taking into consideration the direction of rotation of the latter, from the distal end of the intermediate connection portion (3) of the said tool.

5. Tool according to claim 4, **characterised in that** its active, lower part (4) has a convex outer edge (6).

6. Tool according to any one of claims 1 to 5, **characterised in that** its active part is inclined in the front direction, such that the lower surface (8) of its rear portion is placed at a level higher than that of the lower surface (9) of its working front portion (10).

7. Tool according to any one of claims 1 to 6, **characterised in that** the upper surface of the active, lower part (4) comprises a boss (11) which is situated after its front portion (10), spaced from the leading edge (5).

8. Tool according to any one of claims 1 to 7, **characterised in that** the active, lower part (4), or at least the working front portion (10) of the latter, is made from a material which has a high level of hardness, and is added to the remaining part of the tool.

9. Machine for cultivation of the soil, comprising a rotor (12) which rotates around a vertical or substantially vertical axis (A-A) and is provided at its periphery with interchangeable tools, **characterised in that** these tools (1) are produced according to any one of claims 1 to 8.

10. Machine according to claim 9 for cultivation of the soil, provided with at least two tools (1) which are produced according to any one of claims 1 to 8, **characterised in that** the rotor (12) and the articulation end (2) of the said tools (1) are arranged in order to permit fitting, with freedom of pivoting, of these tools, in conditions such that when the latter are installed on the rotor (12), their axes of pivoting (B-B) converge downwards, in the direction of the axis of rotation (A-A) of the latter, forming an angle (β) with the said axis of rotation (A-A).
